(19) Europäisches Patentamt
European Patent Office
Office européen des brevets

(11) **EP 4 517 903 A1**

(12) **EUROPEAN PATENT APPLICATION**
published in accordance with Art. 153(4) EPC

(43) Date of publication:
05.03.2025 Bulletin 2025/10

(21) Application number: 22950729.8

(22) Date of filing: 15.07.2022

(51) International Patent Classification (IPC):
*H01M 10/0567* (2010.01)    *H01M 10/0525* (2010.01)

(52) Cooperative Patent Classification (CPC):
H01M 10/0567; H01M 4/525; H01M 10/052;
H01M 10/0525; H01M 10/0568; H01M 10/0569;
H01M 10/4235; H01M 2004/028; H01M 2300/0025;
Y02E 60/10

(86) International application number:
PCT/CN2022/106063

(87) International publication number:
WO 2024/011611 (18.01.2024 Gazette 2024/03)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: Contemporary Amperex Technology
(Hong Kong) Limited
Central, Central And Western District (HK)

(72) Inventors:
• GUO, Jie
  Ningde, Fujian 352100 (CN)
• WU, Zeli
  Ningde, Fujian 352100 (CN)
• HAN, Changlong
  Ningde, Fujian 352100 (CN)
• WANG, Guan
  Ningde, Fujian 352100 (CN)

(74) Representative: Gong, Jinping
CocreateIP
Neumarkterstr. 21
81673 München (DE)

(54) **NONAQUEOUS ELECTROLYTE, SECONDARY BATTERY, AND ELECTRICAL DEVICE**

(57) The present application provides a non-aqueous electrolyte, a secondary battery, and an electrical device. The non-aqueous electrolyte includes at least two of a boron-containing lithium salt additive, a phosphorus-containing lithium salt additive, and a sulfur-containing lithium salt additive; based on a total mass of the non-aqueous electrolyte, a mass percentage of the boron-containing lithium salt additive is A1%; based on the total mass of the non-aqueous electrolyte, a mass percentage of the phosphorus-containing lithium salt additive is A2%; based on the total mass of the non-aqueous electrolyte, a mass percentage of the sulfur-containing lithium salt additive is A3%; and the non-aqueous electrolyte satisfies: $0 < A1 + A2 + A3 \leq 3$. The present application can improve cycle performance and dynamics performance of the secondary battery.

Fig. 1

EP 4 517 903 A1

**Description**

**TECHNICAL FIELD**

The present application relates to the field of batteries, in particular to a non-aqueous electrolyte, a secondary battery and an electrical device.

**BACKGROUND**

Secondary batteries have characteristics of high capacity, long service life, and the like, and thus have been widely used in electronic devices, such as mobile phones, notebook computers, scooters, electric vehicles, electric airplanes, electric ships, electric toy cars, electric toy ships, electric toy planes, and electric tools.

With increasingly wide use of batteries, requirements for performances of secondary batteries are increasingly stringent. In order to improve performances of secondary batteries, materials within the secondary batteries, such as an electrolyte, are usually optimized and improved. The electrolyte, as a transport medium for metal ions in the secondary batteries, has a non-negligible impact on performances of the secondary batteries.

However, when known improved electrolytes are applied to secondary batteries, the secondary batteries are still not able to simultaneously improve cycle performance and dynamic performance during use.

**SUMMARY**

The present application is based on the foregoing topic and aims to provide a non-aqueous electrolyte, a secondary battery, and an electrical device.

A first aspect of the present application provides a non-aqueous electrolyte for secondary batteries, said non-aqueous electrolyte comprises at least two of a boron-containing lithium salt additive, a phosphorus-containing lithium salt additive, and a sulfur-containing lithium salt additive; based on a total mass of the non-aqueous electrolyte, a mass percentage of the boron-containing lithium salt additive is A1%; based on the total mass of the non-aqueous electrolyte, a mass percentage of the phosphorus-containing lithium salt additive is A2%; based on the total mass of the non-aqueous electrolyte, a mass percentage of the sulfur-containing lithium salt additive is A3%; and the non-aqueous electrolyte satisfies: $0 < A1 + A2 + A3 \leq 3$; optionally, $0.01 \leq A1 + A2 + A3 \leq 2$.

As a result, by controlling the mass percentage of the boron-containing lithium salt additive, of the phosphorus-containing lithium salt additive and of the sulfur-containing lithium salt additive to satisfy the above formula in the present application, the boron-containing lithium salt additive and the phosphorus-containing lithium salt additive both can participate in the formation of a CEI film, and the CEI film has a complicated composition in its structure and is dense and uniform, which can provide a good protection for positive electrode active materials and effectively reduce decomposition of the electrolyte to ensure stability of the electrolyte performance, thus improving cycle stability of secondary batteries; and the CEI film has a relatively low interface impedance, which is conducive to improving dynamic performance of secondary batteries. The boron-containing lithium salt additive and sulfur-containing lithium salt additive work synergistically, and the boron-containing lithium salt additive can passivate a positive electrode current collector and reduce the risk of corrosion of the sulfur-containing lithium salt additive on the positive electrode current collector, thus further improving cycle stability of secondary batteries. At least two of the boron-containing lithium salt additive, the phosphorus-containing lithium salt additive and the sulfur-containing lithium salt additive together can improve conductivity of the electrolytic solution, thereby further improving dynamic performance of secondary batteries; and at least two of the boron-containing lithium salt additive, the phosphorus-containing lithium salt additive and the sulfur-containing lithium salt additive together can jointly form a SEI film on the surface of the negative electrode active material, and the SEI film has a complicated composition for its structure, and its film layer is dense and uniform, and can effectively provide a protective effect for the negative electrode active material, and the SEI film has a relatively low interface impedance, which can effectively improve dynamic performance of secondary batteries.

In any embodiment, the non-aqueous electrolyte satisfies at least one of conditions (1) to (3): (1) $0 < A1 \leq 2.4$; (2) $0 < A2 \leq 2.1$; (3) $0 < A3 \leq 2.1$. When the mass percentage of the boron-containing lithium salt additive is in the above range, it is possible to ensure that the boron-containing lithium salt additive can sufficiently form an interfacial film on the surface of the positive electrode active material and/or the negative electrode active material, so as to provide good protection for the positive electrode active material and/or the negative electrode active material, thereby improving cycle stability of secondary batteries. When the mass percentage of the phosphorus-containing lithium salt additive is in the above range, it can ensure that the phosphorus-containing lithium salt additive can fully form an interfacial film on the surface of the positive electrode active material and/or the negative electrode active material, so as to provide good protection for the positive electrode active material and/or the negative electrode active material, thereby improving cycle stability of secondary batteries. When the mass percentage of the sulfur-containing lithium salt additive is in the above range, stability of the electrolytic solution can be guaranteed.

**In** any embodiment, the boron-containing lithium salt additive comprises one or more of lithium bifluoro-oxalate borate LiDFOB, lithium tetrafluoroborate $LiBF_4$, and lithium bisoxalate borate LiBOB; and/or the phosphorus-containing lithium salt additive comprises one or more of lithium difluorophosphate $LiPO_2F_2$, lithium fluorophosphate $Li_2PO_3F$, and lithium phosphorate $Li_3PO_4$; and/or the sulfur-containing lithium salt additive comprises one or more of lithium fluor-osulfonate $LiFSO_3$, lithium sulfate $Li_2SO_4$, and lithium sulfamate $LiSO_3NH_2$.

In any embodiment, the non-aqueous electrolyte further comprises a negative electrode film-forming additive, the negative electrode film-forming additive is configured to form an interfacial film on the surface of the negative electrode active material; the negative electrode film-forming additive has a mass percentage of B% based on the total mass of the non-aqueous electrolyte; and the non-aqueous electrolyte meets: $2 \leq B/(A1+A2+A3) \leq 60$; optionally, $3 \leq B/(A1+A2+A3) \leq 50$.

As a result, the boron-containing lithium salt additive, the phosphorus-containing lithium salt additive, and the sulfur-containing additive of the present application can, on the one hand, work together with the negative electrode film-forming additive to form a SEI film, and can improve structural composition and impedance of the SEI film, thereby improving cycle performance of secondary batteries; and, on the other hand, can be used as a positive electrode film-forming additive to protect the positive electrode active material, and can work synergistically with the negative electrode film-forming additive to jointly improve interfacial properties of secondary batteries, thereby improving cycle performance of secondary batteries.

In any embodiment, the negative electrode film-forming additive comprises a gaseous film-forming additive and/or a non-gaseous film-forming additive; optionally, the negative electrode film-forming additive comprises a gaseous film-forming additive and a non-gaseous film-forming additive; based on the total mass of the non-aqueous electrolyte, a mass percentage of the gaseous film-forming additive is C%; based on the total mass of the non-aqueous electrolyte, a mass percentage of the non-gaseous film-forming additive is D%, and the non-aqueous electrolyte satisfies: $0.005 \leq C*D \leq 20$; optionally, $0.01 \leq C*D \leq 15$.

As a result, by controlling the mass percentage of the gaseous film-forming additive and of the non-gaseous film-forming additive in the above ranges in the present application, it is thereby possible to further improve the structure of the SEI film, thereby improving cycle performance of secondary batteries.

In any embodiment, the gaseous film-forming additive comprises one or more of carbon monoxide, carbon dioxide, sulfur dioxide, sulfur trioxide, nitrogen dioxide, nitrogen trioxide, phosphorus trioxide, and phosphorus pentoxide; optionally, the gaseous film-forming additive comprises carbon monoxide and carbon dioxide; based on the total mass of the nonaqueous electrolyte, a mass percentage of the carbon monoxide is C1%; based on the total mass of the nonaqueous electrolyte, a mass percentage of the carbon dioxide is C2%, and the non-aqueous electrolyte satisfies: $0.01 \leq C2/C1 \leq 60$; optionally, $0.1 \leq C2/C1 \leq 40$.

As a result, by controlling the ratio of the mass percentage of carbon monoxide and the mass percentage of carbon dioxide in the above range in the present application, it is possible to effectively improve the compositional structure of the SEI film, thereby improving cycle stability of secondary batteries.

In any embodiment, $10^{-6} \leq C1 \leq 0.1$; and/or $10^{-6} \leq C2 \leq 0.5$.

In any embodiment, the non-gaseous film-forming additive comprises one or more of a carbonate additive, a sulfate additive, and a sulfite additive; optionally, the carbonate additive comprises a cyclic carbonate additive and/or a linear carbonate additive; further, the cyclic carbonate additive comprises a vinylidene carbonate VC, a fluorinated ethylene carbonate FEC, difluoroethylene carbonate DFEC, vinyl ethylene carbonate VEC, and dicaprylyl carbonate CC; the linear carbonate additive includes one or more of allyl ethyl carbonate AEC, diphenyl carbonate DPC, methyl allyl carbonate MAC, and polycarbonate VA; optionally, the sulfate additive includes a cyclic sulfonate additive and/or a hydrocarbyl sulfate additive; further, the cyclic sulfonate additive includes one or more of 1,3-propane sultone PS, propene sultone PES, and 3-fluoro-1,3-propane sultone FPS; and/or the hydrocarbyl sulfate additive includes one or more of ethylene sulfate DTD, diethyl sulfate DES, and dimethyl sulfate DMS; optionally the sulfite additive includes ethylene sulfite ES and/or vinyl ethylene sulfite VES.

As a result, the non-gaseous film-forming additive of the present application is capable of forming an SEI film on the surface of the negative electrode active material, and forming a film on the surface of the SEI film from a plurality of components together may enrich the film layer structure of the SEI film, thereby improving structural stability of the SEI film.

In any embodiment, $0 < D \leq 7$.

A second aspect of the present application further provides a secondary battery, including a positive electrode plate, a negative electrode plate and the non-aqueous electrolyte according to any one of embodiments of the first aspect of the present application; the positive electrode plate comprises a positive electrode active material and the negative electrode plate comprises a negative electrode active material.

A third aspect of the present application further provides an electrical device, including the secondary battery according to the second aspect of the present application.

**DESCRIPTION OF THE DRAWINGS**

In order to explain the technical solutions of the embodiments of the present application more clearly, the following will briefly introduce the drawings that need to be used in the embodiments of the present application. Obviously, the drawings described below are only some embodiments of the present application. A person of ordinary skill in the art can obtain other drawings based on the drawings without creative work.

Fig. 1 is a schematic diagram of an embodiment of a secondary battery of the present application.
Fig. 2 is an exploded schematic diagram of an embodiment of the secondary battery in Fig. 1.
Fig. 3 is a schematic diagram of an embodiment of a battery module of the present application.
Fig. 4 is a schematic diagram of an embodiment of a battery pack of the present application.
Fig. 5 is an exploded schematic diagram of an embodiment of the battery pack shown in Fig. 4.
Fig. 6 is a schematic diagram of an embodiment of an electrical device including the secondary battery of the present application as a power source.

The drawings are not drawn to actual scale.
Reference numerals are as follows:

1. Battery pack; 2. Upper box body; 3. Lower box body; 4. Battery module;
5. Secondary battery; 51. Housing; 52. Electrode assembly;
53. Cover plate;
6. Electrical device.

**DETAILED DESCRIPTION**

Hereinafter, embodiments of the electrolyte, secondary battery and the electrical device containing the same will be described in detail with reference to the accompanying drawings as appropriate. However, unnecessary detailed descriptions may be omitted in some cases, for example the detailed description of a well-known item or the repetitive description of an actually identical structure, so as to prevent the following description from becoming unnecessarily redundant and to facilitate understanding by those skilled in the art. In addition, the drawings and the following description are provided for those skilled in the art to fully understand the present application, and are not intended to limit the subject matter described in the claims.

The "range(s)" disclosed in this application is/are defined in the form of lower and upper limits, and a given range is defined by selection of a lower limit and an upper limit that define boundary of the particular range. Ranges defined in this manner may or may not be inclusive of the endpoints, and may be arbitrarily combined. That is, any lower limit may be combined with any upper limit to form a range. For example, if the ranges of 60-120 and 80-110 are listed for a particular parameter, it is to be understood that the ranges of 60-110 and 80-120 are also contemplated. Additionally, if the minimum range values 1 and 2 are listed, and the maximum range values 3, 4, and 5 are listed, the following ranges are all expected: 1-3, 1-4, 1-5, 2- 3, 2-4 and 2-5. In the present application, unless stated otherwise, the numerical range "a-b" represents an abbreviated representation of any combination of real numbers between a and b, where both a and b are real numbers. For example, the numerical range "0-5" means that all real numbers between "0-5" have been listed herein, and the range "0-5" is just an abbreviated representation of the combination of these numerical values. In addition, when a parameter is expressed as an integer greater than or equal to 2, it is equivalent to disclose that the parameter is, for example, an integer of 2, 3, 4, 5, 6, 7, 8, 9, 10, 11, 12, and the like.

Unless stated otherwise, all the embodiments and the optional embodiments of the present application can be combined with each other to form a new technical solution, and such technical solution should be considered to be included in the disclosure of the present application.

Unless stated otherwise, all steps of the present application can be carried out sequentially, and also can be carried out randomly, preferably they are carried out sequentially. For example, the method includes steps (a) and (b), indicating that the method may include steps (a) and (b) performed in sequence, or that the method may include steps (b) and (a) performed in sequence. For example, reference to the method further comprising step (c) indicates that step (c) may be added to the method in any order. As an example, the method may comprises steps (a), (b) and (c), steps (a), (c) and (b), or steps (c), (a) and (b), and the like.

Unless stated otherwise, the transition phases "comprise", "comprising", "contain" and "containing" mentioned in the present application mean that it is drafted in an open mode, or it may also mean a close mode. For example, the transition phases "comprise", "comprising", "contain" and "containing" may mean that other components not listed may also be included or contained, or only the listed components may be included or contained.

In the present application herein, unless otherwise stated, the term "or" is inclusive. For example, the phrase "A or B" means "A, B, or both A and B". More specifically, any of the following conditions meets "A or B": A is true (or present) and B is false (or absent); A is false (or absent) and B is true (or present); or both A and B are true (or present).

As used herein, the terms "a plurality of" mean two or more.

With the application and promotion of secondary batteries, their comprehensive performance has received increasing attention. The material structure stability of a positive electrode active material, as a compound in which lithium is intercalated and a component for providing active lithium ions, has a direct impact on the overall performance of lithium-ion batteries. In the long-term charging and discharging process, the positive electrode material itself will be inevitably damaged for its structure in the process of continuously de-intercalating/intercalating lithium ions, and the destruction of the position at which lithium is intercalated directly leads to irreversible capacity loss. Moreover, the positive electrode active material is prone to side reactions with the electrolyte, which further destroys the structure of the material itself. Ternary materials as an example of the positive electrode active material comprise manganese, cobalt and nickel, wherein nickel can improve a specific capacity of the material, cobalt can reduce the condition of mixed cationic occupation and stabilize crystal structure of the ternary materials, and manganese can reduce cost of the material and improve structural stability and safety of the material. However, in the process of lithium de-intercalation from the positive electrode active material, nickel oxidizes from +2 to +4, and the tetravalent nickel, which is strongly oxidizing, is prone to side reactions with the electrolyte, thereby causing structural damage to the active material and making the battery capacity decay.

In view of the above problems, the inventors consider ensuring structural stability of the positive electrode active material from the perspective of protecting the positive electrode active material. On this basis, the inventors improved the non-aqueous electrolyte by adding to the non-aqueous electrolyte a boron-containing lithium salt additive, which is capable of forming a positive electrode solid electrolyte interface film (CEI film) on the surface of the positive electrode active material to provide a protection for the positive electrode active material. However, the inventors further found that the CEI film formed from the boron-containing lithium salt additive has a poor film uniformity, which could not provide a good protection for the positive electrode active material, and made it possible for the positive electrode active material to be significantly damaged, thereby reducing cycle performance of secondary batteries. In addition, in order to improve the protective performance of the CEI film, increasing the concentration of the boron-containing lithium salt additive may be considered. However, the CEI film so formed has a too high impedance value, which may deteriorate dynamic performance of secondary batteries.

The inventors of the present application surprisingly discovered after conducting a large amount of research that when the non-aqueous electrolyte simultaneously contains a boron-containing lithium salt additive, a phosphorus-containing lithium salt additive, and a sulfur-containing lithium salt additive, the three additives can collectively form a dense and homogeneous CEI film on the surface of the positive electrode active material, and the CEI film is capable of providing good protection for the positive electrode active material, and has a lower impedance. As a result, the cycle performance and dynamic performance of secondary batteries may be improved overall. The technical solution of the present application will be described in detail next.

Non-aqueous electrolyte

In a first aspect, the present application provides a non-aqueous electrolyte. The non-aqueous electrolyte is an important component of a secondary battery and serves to transport metal ions, such as lithium ions, between a positive electrode and a negative electrode of the secondary battery.

The non-aqueous electrolyte comprises at least two of a boron-containing lithium salt additive, a phosphorus-containing lithium salt additive, and a sulfur-containing lithium salt additive; wherein based on a total mass of the non-aqueous electrolyte, a mass percentage of the boron-containing lithium salt additive is A1%; based on the total mass of the non-aqueous electrolyte, a mass percentage of the phosphorus-containing lithium salt additive is A2%; based on the total mass of the non-aqueous electrolyte, a mass percentage of the sulfur-containing lithium salt additive is A3%; and the non-aqueous electrolyte satisfies:

$$0 < A1 + A2 + A3 \leqslant 3.$$

Optionally, said non-aqueous electrolyte comprises a boron-containing lithium salt additive, a phosphorus-containing lithium salt additive and a sulfur-containing lithium salt additive.

Although the mechanism is not clear, the non-aqueous electrolyte of the present application, when applied to a secondary battery, can simultaneously improve the cycle performance and dynamic performance of the secondary battery, and thus the inventor speculates that the reaction mechanism may be as follows:

The boron-containing lithium salt, as a lithium salt with a B atom as its center atom, can be coordinated with alkoxy, o-diphenol, o-hydroxyl, carboxylic acid and the like to form an anionic coordination complex, and the anionic coordination complex is mainly of a large π-conjugate structure, with a relatively dispersed distribution of negative charges of the center ion, in which its charges are delocalized, meanwhile the anion has a larger radius, which makes it difficult for the anion to form ion pairs with lithium ions with a stronger binding force in organic solvents, and thus has a relative good solubility. The more electron-absorbing groups in the anionic coordination complex, the more stable the anionic structure is, the higher the solubility of lithium ions in the non-aqueous electrolyte is, and the more favorable it is to improve conductivity of the non-aqueous electrolyte, which is conducive to the improvement of dynamic performance of the non-aqueous electrolyte, thus to the improvement of dynamic performance of secondary batteries. Moreover, at a high potential, the boron-containing lithium salt can passivate a positive electrode current collector and provide good protection for the positive electrode current collector. Furthermore, the boron-containing lithium salt can form a CEI film on the surface of the positive electrode active material, and the formation of CEI film can effectively reduce continuous oxidative decomposition of the non-aqueous electrolyte caused by the positive electrode active material, so as to provide good protection for the positive active material and improve cycle stability of the positive active material; it can also reduce decomposition of the electrolyte and ensure stability of the electrolyte. Moreover, the boron-containing lithium salt can further form a solid electrolyte interface film (SEI film) with excellent performances on the surface of the negative electrode active material. The SEI film is insoluble in organic solvents, and it can be stable in an organic electrolytic solution, which can effectively reduce solvent molecules in the electrolytic solution to be embedded in the negative electrode active material, thereby ensuring the structural stability of the negative electrode active material, and thus improving the cycle performance of the secondary battery.

The phosphorus-containing lithium salt additive has a relatively large anionic group with a high ionic conductivity, which is conducive to further improving dynamic performance of the electrolytic solution, and the phosphorus-containing lithium salt additive can form a CEI film on the surface of the positive electrode active material, and the CEI film so formed has a high lithium ion conductivity, which can significantly inhibit continuous decomposition of the electrolyte and reduce leaching out of transition metal ions in the positive electrode active material, thereby improving cycle performance of secondary batteries. In addition, the phosphorus-containing lithium salt additive is further capable of forming an SEI film on the surface of the negative electrode active material, which has a low interface impedance, thereby significantly improving cycle performance of batteries.

The sulfur-containing lithium salt additive is insensitive to water in the electrolyte due to its better antioxidability and high thermal stability, and it is less prone to a side reaction; and the sulfur-containing lithium salt additive has a relatively high conductivity, which is conducive to enhancing migration rate of lithium ions, thereby enhancing dynamic performance of the electrolytic solution. However, when the sulfur-containing lithium salt additive is used alone, it has a corrosive effect on the positive electrode current collector, deteriorating electrochemical performance of secondary batteries.

In the present application, by controlling the mass percentage of the boron-containing lithium salt additive, of the phosphorus-containing lithium salt additive and of the sulfur-containing lithium salt additive to satisfy the above formula in the present application, the boron-containing lithium salt additive and the phosphorus-containing lithium salt additive both can participate in the formation of a CEI film, and the CEI film has a complicated composition in its structure and is dense and uniform, which can provide a good protection for positive electrode active materials and effectively reduce decomposition of the electrolyte to ensure stability of the electrolyte performance, thus improving cycle stability of secondary batteries; the CEI film has a relatively low interface impedance, which is conducive to improving dynamic performance of secondary batteries. The boron-containing lithium salt additive and sulfur-containing lithium salt additive work synergistically, and the boron-containing lithium salt additive can passivate a positive electrode current collector and reduce the risk of corrosion of the sulfur-containing lithium salt additive on the positive electrode current collector, thus further improving cycle stability of secondary batteries. At least two, especially three of the boron-containing lithium salt additive, the phosphorus-containing lithium salt additive and the sulfur-containing lithium salt additive together can improve conductivity of the electrolytic solution, thereby further improving dynamic performance of secondary batteries; and at least two, especially three of the boron-containing lithium salt additive, the phosphorus-containing lithium salt additive and the sulfur-containing lithium salt additive together can jointly form a SEI film on the surface of the negative electrode active material, and the SEI film has a complicated composition for its structure, and its film layer is dense and uniform, and can effectively provide a protective effect for the negative electrode active material, and the SEI film has a relatively low interface impedance, which can effectively improve dynamic performance of secondary batteries. Optionally, $0 < A1 + A2 + A3 \leq 2$. By way of example, A1 + A2 + A3 may be 0.5, 1, 1.2, 1.5, 1.8, 2, 2.2, 2.5, 2.8, or 3.

In some embodiments, the boron-containing lithium salt additive comprises one or more of lithium bifluorooxalate borate LiDFOB, lithium tetrafluoroborate $LiBF_4$, and lithium bisoxalate borate LiBOB.

The B atom may combine with an oxygen-containing oxalate ligand, and the combined product has excellent thermal stability and easily forms an interfacial film with excellent performance on the surface of the negative electrode active material and/or the positive electrode active material, thereby ensuring structural stability of the negative electrode active material and/or the positive electrode active material and then improving cycle performance of the secondary battery. Of course, the B atom can also be combined with halogen atoms, especially fluorine atoms, the fluorine atoms have a strong electron-absorbing induced effect, high thermal and chemical stability, and lithium ions has a high solubility in the electrolytic solution, so that solubility of lithium ions and thus conductivity of the electrolytic solution may be guaranteed.

When the lithium tetrafluoroborate (LiBF$_4$) is used with an organic solvent such as a carbonate solvent or an additive in the electrolytic solution, the system based on the lithium tetrafluoroborate has a relatively low viscosity, which is conducive to the release of lithium ions, thereby improving conductivity of the electrolytic solution. The SEI film formed from the lithium tetrafluoroborate has a uniform thickness, good dynamics activity, and low charge transfer resistance in secondary batteries, which can significantly improve low-temperature performance of the secondary batteries; and the SEI film is less prone to thermal decomposition, has a relatively stable performance at high temperatures, and therefore can significantly improve the high-temperature performance of the secondary battery.

Either the lithium bisoxalate borate LiBOB or the lithium difluorooxalate borate LiDFOB has a passivation effect on a positive electrode current collector in the positive electrode plate, which can reduce the risk of corrosion of the positive electrode current collector due to side reactions with the positive electrode current collector and improve structural stability of the positive electrode plate. In addition, the electrolytic solution containing either the lithium bisoxalate borate LiBOB or the lithium difluorooxalate borate LiDFOB is unlikely to produce acidic substances, which can further reduce the risk of corrosion of the positive electrode current collector. The lithium bisoxalate borate LiBOB and the lithium difluorooxalate borate LiDFOB have good compatibility with the positive electrode active material, which is conducive to migration of lithium ions; and the LiBOB or the LiDFOB can form an interfacial film with excellent performances on the surface of the negative electrode active material and/or positive electrode active material to improve protective performance for the negative electrode active material and/or positive electrode active material.

When the lithium tetrafluoroborate LiBF$_4$, the lithium bisoxalate borate LiBOB and the lithium difluorooxalate borate LiDFOB are used together, the three are capable of forming a CEI film on the surface of the positive electrode active material, and the CEI film effectively reduces decomposition of the electrolyte caused by the positive electrode active material; the three are further capable of forming a SEI film on the surface of the negative electrode active material, and the SEI film is able to enhance the transfer of lithium ions and reduce the continuous reduction and decomposition of the electrolyte, thereby improving the cycle stability of the secondary battery.

In some embodiments, $0 < A1 \leq 2.4$.

When the mass percentage of the boron-containing lithium salt additive is in the above range, it is possible to ensure that the boron-containing lithium salt additive can sufficiently form an interfacial film on the surface of the positive electrode active material and/or the negative electrode active material, so as to provide good protection for the positive electrode active material and/or the negative electrode active material, thereby improving cycle stability of secondary batteries. By way of example, the mass percentage A1% of the boron-containing lithium salt additive may be 0.1%, 0.2%, 0.5%, 1%, 2%, or 2.4%; or a range consisting of any two of the above values.

In some embodiments, the phosphorus-containing lithium salt additive comprises one or more of lithium difluorophosphate LiPO$_2$F$_2$, lithium fluorophosphate Li$_2$PO$_3$F, and lithium phosphate Li$_3$PO$_4$.

The above phosphorus-containing lithium salt additive is an inorganic lithium phosphate salt, which can participate in the film formation of the positive electrode at the initial charging process of secondary batteries to form a stable CEI film with a low impedance, the CEI film can effectively reduce oxidative decomposition of the electrolyte, such as, the side reaction between the carbonate solvent in the electrolyte and the surface of the positive electrode active material, thereby ensuring structural stability of the electrolyte and the CEI film can alleviate the positive electrode active material to be damaged and improve cycle performance of secondary batteries. Moreover, the phosphorus-containing lithium salt mentioned above can form a SEI film rich in Li$_x$PO$_y$F$_z$ and LiF on the surface of the negative electrode active material, and the SEI film has a low interface impedance, which can significantly improve cycle performance of secondary batteries.

In some embodiments, $0 < A2 \leq 2.1$.

When the mass percentage of the phosphorus-containing lithium salt additive is in the above range, it can ensure that the phosphorus-containing lithium salt additive can fully form an interfacial film on the surface of the positive electrode active material and/or the negative electrode active material, so as to provide good protection for the positive electrode active material and/or the negative electrode active material, thereby improving cycle stability of secondary batteries. By way of example, the mass percentage A2% of the phosphorus-containing lithium salt additive may be 0.1%, 0.2%, 0.5%, 1%, 2%, or 2.1%; or a range comprising any two of the above values.

In some embodiments, the sulfur-containing lithium salt additive comprises one or more of lithium fluorosulfonate LiFSO$_3$, lithium sulfate Li$_2$SO$_4$, and lithium sulfamate LiSO$_3$NH$_2$.

The above-described sulfur-containing lithium salt additives, when used together with the boron-containing lithium salt additives and the phosphorus-containing lithium salt additives, can significantly improve conductivity and stability of the electrolytic solution.

In some embodiments, $0 < A3 \leq 2.1$.

When the mass percentage of the sulfur-containing lithium salt additive is in the above range, stability of the electrolytic solution can be guaranteed. By way of example, the mass percentage A3% of the sulfur-containing lithium salt additive may be 0.1%, 0.2%, 0.5%, 1%, 2%, or 2.1%.

In some embodiments, the non-aqueous electrolyte further comprises a negative electrode film-forming additive, the negative electrode film-forming additive is configured to form an interfacial film on the surface of the negative electrode active material; the negative electrode film-forming additive has a mass percentage of B% based on the total mass of the non-aqueous electrolyte; and the non-aqueous electrolyte meets: $2 \leq B/(A1+A2+A3) \leq 60$.

When the non-aqueous electrolyte is applied to secondary batteries, the negative electrode film-forming additive mainly forms a SEI film on the surface of the negative electrode active material, and the SEI film as an ion conductor can make metal ions pass through, and the metal ions are intercalated into and de-intercalated from the SEI film, so as to realize the charging and discharging of the secondary batteries; but at the same time it further serves as an electron insulator to reduce the risk of the electrons passing through. Moreover, the SEI film is insoluble in organic solvents and can be stable in an organic electrolyte solvent, and the solvent molecules basically fail to pass through the film, which can effectively reduce the co-embedding of solvent molecules and reduce the damage to the negative electrode active material due to the co-embedding of solvent molecules, thereby improving the cycle performance and service life of the active material.

The boron-containing lithium salt additive, the phosphorus-containing lithium salt additive, and the sulfur-containing additive of the present application can, on the one hand, co-work, together with the negative electrode film-forming additive, to form a SEI film, and can improve structural composition and impedance of the SEI film, thereby improving cycle performance of secondary batteries; and on the other hand, can be used as a positive electrode film-forming additive to protect the positive electrode active material, and can work synergistically with the negative electrode film-forming additive to jointly improve interfacial properties of secondary batteries, thereby improving cycle performance of secondary batteries. In particular, when its ratio is in the above range, it can provide good protection for the positive and negative electrode active materials on the basis of ensuring conductivity of the electrolyte. Optionally, $3 \leq B/(A1+A2+A3) \leq 50$. By way of example, $B/(A1+A2+A3)$ may be 2, 3, 5, 6, 8, 10, 12, 15, 18, 20, 22, 25, 28, 30, 32, 35, 40, 45, 50, 55, or 60; or a range consisting of any two of the above values.

In some embodiments, $0.005 \leq B \leq 7$. By way of example, the mass percentage B% of the negative electrode film-forming additive may be 0.005%, 0.01%, 0.05%, 0.1%, 0.5%, 1%, 2%, 5%, 6%, or 7%; or a range consisting of any two of the above values.

In some embodiments, the negative electrode film-forming additive comprises a gaseous film-forming additive and/or a non-gaseous film-forming additive; optionally, the negative electrode film-forming additive comprises a gaseous film-forming additive and a non-gaseous film-forming additive; based on the total mass of the non-aqueous electrolyte, a mass percentage of the gaseous film-forming additive is C%; based on the total mass of the non-aqueous electrolyte, a mass percentage of the non-gaseous film-forming additive is D%, and the non-aqueous electrolyte satisfies: $0.005 \leq C*D \leq 20$.

The gaseous film-forming additive can induce the electrolyte to form a stable SEI film on the surface of active material, and the SEI film mainly includes lithium carbonate, which has a more stable performance, thereby realizing effective passivation of the surface of the negative electrode active material; and improving power and cycle life of secondary batteries.

The non-gaseous film-forming additive can form a SEI film together with the gaseous film-forming additive on the surface of the negative electrode active material, and the SEI film has a dense and uniform film structure, and the joint use of the two can reduce consumption of each other, and can synergistically improve cycle performance of secondary batteries. In the present application, by controlling the mass percentage of the gaseous film-forming additive and of the non-gaseous film-forming additive in the above ranges in the present application, it is thereby possible to further improve the structure of the SEI film, thereby improving cycle performance of secondary batteries. Optionally, $0.01 \leq C*D \leq 15$. By way of example, the $C*D$ may be 0.05, 0.01, 0.02, 0.05, 0.1, 0.12, 0.15, 0.2, 0.3, 0.35, 0.4, 0.5, 0.8, 1, 1.5, 2, 2.5, 3, 4, 5, 6, 7, 8, 9, 10, 11, 12, 13, 14, 15, 18, or 20; or a range consisting of any two of the above values.

In some embodiments, $0 < D \leq 7$. Optionally, $0 < D \leq 6$. By way of example, the mass percentage D% of the non-gaseous film-forming additive may be 0.1%, 1%, 2%, 3%, 4%, 5%, 6%, or 7%; or a range consisting of any two of the above values.

As an example of a gaseous film-forming additive, the gaseous film-forming additive comprises one or more of carbon monoxide, carbon dioxide, sulfur dioxide, sulfur trioxide, nitrogen dioxide, nitrogen trioxide, phosphorus trioxide, and phosphorus pentoxide. The above gaseous film-forming additive can induce the formation of an SEI film and improve the structure of the SEI film.

Furthermore, the gaseous film-forming additive comprises carbon monoxide and carbon dioxide; based on the total mass of the non-aqueous electrolyte, a mass percentage of the carbon monoxide is C1%; based on the total mass of the non-aqueous electrolyte, a mass percentage of the carbon dioxide is C2%, and the non-aqueous electrolyte satisfies: $0.01 \leq C2/C1 \leq 60$.

Carbon dioxide and carbon monoxide can realize passivation of the surface of the negative electrode active material, form a lithium carbonate-rich SEI film, and improve power and cycle life of secondary batteries. And the carbon dioxide can directly participate in the film-forming reaction on the surface of the negative electrode active material, and the carbon monoxide can absorb oxygen released in the secondary battery system to generate carbon dioxide, and increase the concentration of carbon dioxide, so that the carbon dioxide further participates in the film-forming reaction on the surface of the negative electrode active material. The interaction of carbon dioxide and carbon monoxide can reduce the risk of side reactions of the electrolyte on the surface of the active material, thereby improving stability of the electrolyte. In the present application, by controlling the ratio of the mass percentages of the carbon monoxide and the carbon dioxide in the above range, it is possible to effectively improve the compositional structure of the SEI film and improve the cycle stability of secondary batteries. Optionally, $0.1 \leq C2/C1 \leq 40$. By way of example, the C2/C1 may be 0.01, 00.01, 0.02, 0.05, 0.1, 0.12, 0.15, 0.2, 0.3, 0.35, 0.4, 0.5, 0.8, 1, 1.5, 2, 2.5, 3, 4, 5, 6, 7, 8, 9, 10, 11, 12, 13, 14, 15, 16, 17, 18, 19, 20, 22, 25, 28, 30, 32, 35, 38, 30, 42, 45, 50, 55, 58, or 60; or a range consisting of any two of the above values.

Further, $10^{-6} \leq C1 \leq 0.1$; optionally, $5*10^{-6} \leq C1 \leq 0.08$ ppm.

By way of example, the mass percentage C1 % of carbon monoxide may be $10^{-4}\%$, $2*10^{-4}\%$, $5*10^{-4}\%$, $8*10^{-4}\%$, $10^{-3}\%$, $1.5*10^{-3}\%$, $2*10^{-3}\%$, $2.5*10^{-3}\%$, $3*10^{-3}\%$, $3.5*10^{-3}\%$, $4*10^{3}\%$, $4.5*10^{-3}\%$, $5*10^{-3}\%$, $5.5*10^{-3}\%$, $6*10^{-3}\%$, $7*10^{-3}\%$, $7.5*10^{-3}\%$, $8*10^{-3}\%$, $8.5*10^{-3}\%$, $9*10^{-3}\%$, $9.5*10^{-3}\%$, $10^{-2}\%$, $2*10^{-2}\%$, $3*10^{-2}\%$, $4*10^{-2}\%$, $5*10^{-2}\%$, $6*10^{-2}\%$, $7*10^{-2}\%$, $8*10^{-2}\%$, $9*10^{-2}\%$, or 0.1%; or a range consisting of any two of the above values.

Further, $10^{-6} \leq C2 \leq 0.5$. optionally, $5*10^{-6} \leq C2 \leq 0.4$.

By way of example, the mass percentage C2% of carbon dioxide may be $10^{-4}\%$, $5*10^{-4}\%$, $8*10^{-4}\%$, $10^{-3}\%$, $2*10^{3}\%$, $2.5*10^{-3}\%$, $3*10^{-3}\%$, $3.5*10^{-3}\%$, $4*10^{3}\%$, $4.5*10^{-3}\%$, $5*10^{-3}\%$, $5.5*10^{-3}\%$, $6*10^{-3}\%$, $7*10^{-3}\%$, $7.5*10^{-3}\%$, $8*10^{-3}\%$, $8.5*10^{-3}\%$, $9*10^{-3}\%$, $9.5*10^{-3}\%$, $10^{-2}\%$, $2*10^{-2}\%$, $5*10^{-2}\%$, $6*10^{-2}\%$, $8*10^{-2}\%$, $10^{-1}\%$, $1.1*10^{-1}\%$, $1.2*10^{-1}\%$, $1.5*10^{-1}\%$, $1.8*10^{-1}\%$, $2*10^{-1}\%$, $22*10^{-1}\%$, $2.5*10^{-1}\%$, $2.8*10^{-1}\%$, $3*10^{-1}\%$, $3.2*10^{-1}\%$, $3.8*10^{-1}\%$, $4*10^{-1}\%$, $4.2*10^{-1}\%$, $4.5*10^{-1}\%$, $4.8*10^{-1}\%$, or 0.5%; or a range consisting of any two of the above values.

As an example of the non-gaseous film-forming additive, the non-gaseous film-forming additive comprises one or more of a carbonate additive, a sulfate additive, and a sulfite additive. The non-gaseous film-forming additive is capable of forming an SEI film on the surface of the negative electrode active material, and forming a film on the surface of the SEI film from a plurality of components together may enrich the film layer structure of the SEI film, thereby improving structural stability of the SEI film.

By way of example, the carbonate additive comprises a cyclic carbonate additive and/or a linear carbonate additive; further, the cyclic carbonate additive comprises a vinylidene carbonate VC, a fluorinated ethylene carbonate FEC, difluoroethylene carbonate DFEC, vinyl ethylene carbonate VEC, and dicaprylyl carbonate CC; the linear carbonate additive includes one or more of allyl ethyl carbonate AEC, diphenyl carbonate DPC, methyl allyl carbonate MAC, and polycarbonate VA. The cyclic carbonate additive has a strong dielectric constant, which can dissolve lithium salts to a greater extent, making it easier for lithium salts to dissociate lithium ions and improve conductivity of the electrolytic solution; and the linear carbonate additive has a relatively low viscosity, which can improve migration rate of lithium ions.

By way of example, the sulfate additive includes a cyclic sulfonate additive and/or a hydrocarbyl sulfate additive; further, the cyclic sulfonate additive includes one or more of 1,3-propane sultone PS, propene sultone PES, and 3-fluoro-1,3-propane sultone FPS; and/or the hydrocarbyl sulfate additive includes one or more of ethylene sulfate DTD, diethyl sulfate DES, and dimethyl sulfate DMS.

By way of example, the sulfite additive includes ethylene sulfite ES and/or vinyl ethylene sulfite VES.

In some embodiments, the non-aqueous electrolyte further comprises an organic solvent. The organic solvent may comprise one or more selected from ethylene carbonate EC, propylene carbonate PC, methyl ethyl carbonate EMC, diethyl carbonate DEC, dimethyl carbonate DMC, dipropyl carbonate DPC, methyl propyl carbonate MPC, ethyl propyl carbonate EPC, butylene carbonate BC, methyl formate MF, methyl acetate MA, ethyl acetate EA, propyl acetate PA, methyl propionate MP, ethyl propionate EP, propyl propionate PP, methyl butyrate MB, ethyl butyrate EB, 1,4-butyrolactone GBL, cyclobutanesulfone SF, dimethylsulfone MSM, methylethylsulfone EMS, and diethylsulfone ESE.

The electrolytic solution of the present application can be prepared according to methods conventional in the art. For example, additives, solvents, electrolyte salts and the like can be mixed well to obtain the electrolytic solution. There is no particular limitation on the order of addition of each material. For example, additives, electrolyte salts, and the like can be added to the non-aqueous solvent and mixed well to obtain a non-aqueous electrolytic solution.

In the present application, components and their contents in the electrolytic solution can be determined according to methods known in the art. For example, they can be determined by gas chromatography-mass spectrometry (GC-MS), ion chromatography (IC), liquid chromatography (LC), nuclear magnetic resonance spectroscopy (NMR), and the like.

It is to be noted that, when the electrolytic solution of the present application is tested, a fresh electrolytic solution may be directly taken, or the electrolytic solution may be obtained from the secondary battery. An exemplary method for obtaining the electrolytic solution from the secondary battery includes the following steps: the secondary battery is discharged to a discharge cut-off voltage (for safety reasons, the battery is generally in a fully discharged state) and centrifuged, and then an appropriate amount of centrifuged liquid, namely, a non-aqueous electrolytic solution, is taken. The non-aqueous electrolytic solution may alternatively be directly obtained from an injection port of the secondary battery.

## Secondary Battery

In a second aspect, the present application further provides a secondary battery.

The secondary battery includes a positive electrode plate, a negative electrode plate and a separator and an electrolyte. The separator is provided between the positive electrode plate and the negative electrode plate. The electrolyte may be an electrolyte provided in any of embodiments of the first aspect of the present application. By adopting the above-described electrolyte, the cycle performance and dynamic performance of the secondary battery can be improved.

[Positive electrode plate]

In some embodiments, the positive electrode plate includes a positive electrode current collector and a positive electrode film layer disposed on at least one surface of the positive electrode current collector. For example, the positive electrode current collector has two opposite surfaces in its thickness direction, and the positive electrode film layer is disposed on either or both of the two opposite surfaces of the positive electrode current collector.

The positive electrode film layer includes a positive electrode active material, which may be a positive electrode active material commonly known in the art for secondary batteries. For example, the positive electrode active material may include at least one of a lithium transition metal oxide, a lithium-containing phosphate with an olivine structure, and respective modified compounds thereof. Examples of the lithium transition metal oxide may include at least one of a lithium cobalt oxide, a lithium nickel oxide, a lithium manganese oxide, a lithium nickel cobalt oxide, a lithium manganese cobalt oxide, a lithium nickel manganese oxide, a lithium nickel cobalt manganese oxide, a lithium nickel cobalt aluminum oxide, and respective modified compounds thereof. Examples of the lithium-containing phosphate with an olivine structure may include at least one of a lithium iron phosphate, a composite material of a lithium iron phosphate and carbon, a lithium manganese phosphate, a composite material of a lithium manganese phosphate and carbon, a lithium manganese iron phosphate, a composite material of a lithium manganese iron phosphate and carbon, and respective modified compounds thereof. The present application is not limited to these materials, and may also use other conventionally known materials that can be used as positive electrode active materials of secondary batteries. These positive electrode active materials may be used alone, or may be combined with two or more.

In some embodiments, the positive electrode active material includes $LiNi_xCo_yM_{1-x-y-z}O_2$, where M is one selected from Co, Ni, Mn, Mg, Cu, Zn, Al, Sn, B, Ga, Cr, Sr, V and Ti, $0 \leq y \leq 1$, $0 \leq x < 1$, $x+y+z \leq 1$,. The positive electrode active material is used with the boron-containing lithium salt, and B atoms in the boron-containing lithium salt easily combine with O atoms in the positive electrode active material, thereby reducing charge transfer resistance of the positive electrode active material and reducing diffusion resistance of lithium ions within a bulk phase of the positive electrode active material. Therefore, when the non-aqueous electrolytic solution contains appropriate amounts of lithium tetrafluoroborate and lithium difluorooxalate borate, the low-cobalt or cobalt-free positive electrode active material can have a significantly improved lithium ion diffusion rate, and lithium ions in the bulk phase of the low-cobalt or cobalt-free positive electrode active material can be replenished to the surface in a timely manner so that excessive lithium de-intercalation from the surface of the low-cobalt or cobalt-free cathode active material may be avoided, thereby stabilizing crystal structure of the low-cobalt or cobalt-free cathode active material. The more stable crystal structure of the low-cobalt or cobalt-free positive electrode active material can greatly reduce probability of instability in structural, chemical, or electrochemical properties of the positive electrode active material due to the excessive lithium de-intercalation from the surface of the low-cobalt or cobalt-free positive electrode active material, such as irreversible distortion and increased lattice defects of the positive electrode active material.

$LiNi_xCo_yM_{1-x-y-z}O_2$ may be prepared according to a conventional method in the art. An exemplary preparation method is as follows: a lithium source, a nickel source, a cobalt source, a manganese source, an aluminum source, a precursor of an M element, and a precursor of an N element are mixed and sintered. The sintering atmosphere may be an oxygen-containing atmosphere, such as air atmosphere or oxygen atmosphere. The sintering atmosphere has an $O_2$ concentration of, for example, 70% to 100%. The sintering temperature and time may be adjusted according to an actual situation.

As an example, the lithium source includes, but is not limited to, at least one of lithium oxide ($Li_2O$), lithium phosphate ($Li_3PO_4$), lithium dihydrogen phosphate ($LiH_2PO_4$), lithium acetate ($CH_3COOLi$), lithium hydroxide (LiOH), lithium carbonate ($Li_2CO_3$), and lithium nitrate ($LiNO_3$). As an example, the nickel source includes, but is not limited to, at least one of nickel sulfate, nickel nitrate, nickel chloride, nickel oxalate, and nickel acetate. As an example, the cobalt source includes, but is not limited to, at least one of cobalt sulfate, cobalt nitrate, cobalt chloride, cobalt oxalate, and cobalt acetate. As an example, the manganese source includes, but is not limited to, at least one of manganese sulfate, manganese nitrate, manganese chloride, manganese oxalate, and manganese acetate. As an example, the aluminum source includes, but is not limited to, at least one of aluminum sulfate, aluminum nitrate, aluminum chloride, aluminum oxalate, and aluminum acetate. As an example, the precursor of the M element includes, but is not limited to, at least one of oxides, nitrate compounds, carbonate compounds, hydroxide compounds, and acetate compounds of the M element. As an example, the precursor of the N element includes, but is not limited to, at least one of ammonium fluoride, lithium fluoride, hydrogen fluoride, ammonium chloride, lithium chloride, hydrogen chloride, ammonium nitrate, ammonium nitrite, ammonium carbonate, ammonium bicarbonate, ammonium phosphate, phosphoric acid, ammonium sulfate, ammonium bisulfate, ammonium bisulfite, ammonium sulfite, ammonium bisulfide, hydrogen sulfide, lithium sulfide, ammonium sulfide, and elemental sulfur.

In some embodiments, based on a total mass of the positive electrode film layer, a layered material with molecular formula $LiNi_xCo_yM_{1-x-y-z}O_2$ has a mass percentage of 80% to 99%. For example, the mass percentage of the layered material with molecular formula $LiNi_xCo_yM_{1-x-y-z}O_2$ may be 80%, 81%, 82%, 83%, 84%, 85%, 86%, 87%, 88%, 89%, 90%, 91%, 92%, 93%, 94%, 95%, 96%, 97%, 98%, 99%, or a range of any of the above values. Optionally, the mass percentage of the layered material with molecular formula $LiNi_xCo_yM_{1-x-y-z}O_2$ is 85% to 99%, 90% to 99%, 95% to 99%, 80% to 98%, 85% to 98%, 90% to 98%, 95% to 98%, 80% to 97%, 85% to 97%, 90% to 97%, or 95% to 97%.

In some embodiments, the positive electrode active material comprises a compound with a molecular formula of $LiNi_xCo_yM_{1-x-y}$, wherein M denotes one or more of Mn, Fe, Mg, Al, Cu, and Ti, $x \geq 0.5$, $0 \leq y \leq 0.2$, and $x + y \leq 1$. The lithium-deficient state of the surface of the aforementioned positive electrode active material at a high voltage is prone to a phase change, Li/Ni mixing, oxygen release, and the like of the positive electrode active material surface. The boron-containing lithium salt additive, the phosphorus-containing lithium salt additive and the sulfur-containing lithium salt additive can passivate the surface of the positive electrode active material, and can combine with metal cations, such as $Al^{3+}$ and $Ni^{2+}$, which can improve Li/Ni mixing and passivation of aluminum foil. Further, $CO_2$ and CO can form a film on the surface of the negative electrode active material well, and absorb oxygen released from the positive electrode active material brought about by high voltage, thereby improving cycle life of the secondary battery.

In some embodiments, the positive electrode film layer may further optionally include a positive electrode conductive agent. There is no particular limitation to the type of the positive electrode conductive agent in the present application. As an example, the positive electrode conductive agent includes one or more of superconducting carbon, conductive graphite, acetylene black, carbon black, Ketjen black, carbon dots, carbon nanotubes, graphene, and carbon nanofibers. In some embodiments, based on the total mass of the positive electrode film layer, the positive electrode conductive agent is present in a mass percentage of 5% or less.

In some embodiments, the positive electrode film layer may further optionally include a positive electrode binder. There is no particular limitation on the type of the positive electrode binder in the present application. As an example, the positive electrode binder may include one or more of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluoroacrylate resin. In some embodiments, based on the total mass of the positive electrode film layer, the positive electrode binder is present in a mass percentage of 5% or less.

In some embodiments, the positive electrode current collector may be a metal foil or a composite current collector. As an example of the metal foil, an aluminum foil or an aluminum alloy foil may be used. The composite current collector may include a polymer material base layer and a metal material layer formed on at least one surface of the polymer material base layer. As an example, the metal material may include one or more of aluminum, aluminum alloy, nickel, nickel alloy, titanium, titanium alloy, silver and silver alloy, and the polymer material base layer may include one or more of polypropylene (PP), polyethylene terephthalate (PET), polybutylene terephthalate (PBT), polystyrene (PS) and polyethylene (PE).

The positive electrode film layer is usually formed by coating the positive electrode current collector with a positive electrode slurry, drying, and cold-pressing. The positive electrode slurry is usually formed by dispersing the positive electrode active material, the optional conductive agent, the optional binder, and any other components in a solvent and stirring uniformly. The solvent may be N-methylpyrrolidone (NMP), but is not limited thereto.

[Negative electrode plate]

The negative electrode plate includes a negative electrode current collector and a negative electrode film layer disposed on at least one surface of the negative electrode current collector, and the negative electrode film layer includes a negative electrode active material.

As an example, the negative electrode current collector has two surfaces opposite in its thickness direction, and the negative electrode film layer is disposed on either or both of the two opposite surfaces of the negative electrolyte current collector.

In some embodiments, the negative electrode active material may be a negative electrode active material commonly known in the art for batteries. As an example, the negative electrode active material may include at least one of artificial graphite, natural graphite, soft carbon, hard carbon, a silicon-based material, a tin-based material, lithium titanate, lithium-aluminum alloy, and the like. The silicon-based material may be selected from at least one of elemental silicon, a silicon oxide compound, a silicon carbon composite, a silicon nitrogen composite, and a silicon alloy. The tin-based material may be selected from at least one of elemental tin, a tin oxide compound, and a tin alloy. However, the present application is not limited to these materials, and other conventional materials that may be used as negative electrode active materials of batteries may alternatively be used. One type of these negative electrode active materials may be used alone, or two or more types may be used in combination.

In some embodiments, the negative electrode film layer may further optionally include a negative electrode binder. There is no particular limitation on the type of the negative electrode binder in the present application. As an example, the negative electrode binder may include one or more of styrene butadiene rubber (SBR), water-soluble unsaturated resin SR-1B, water-based acrylic resin such as polyacrylic acid PAA, polymethacrylic acid PMAA, and polyacrylic acid sodium PAAS, polyacrylamide (PAM), polyvinyl alcohol (PVA), sodium alginate (SA), and carboxymethyl chitosan (CMCS). In some embodiments, based on a total mass of the negative electrode film layer, the negative electrode binder is present in a mass percentage of 5% or less.

In some embodiments, the negative electrode film layer may further optionally include a negative electrode conductive agent. There is no particular limitation on the type of the negative electrode conductive agent in the present application. As an example, the negative electrode conductive agent includes one or more of superconducting carbon, conductive graphite, acetylene black, carbon black, Ketjen black, carbon dots, carbon nanotubes, graphene, and carbon nanofibers. In some embodiments, based on the total mass of the negative electrode film layer, the negative electrode conductive agent is present in a mass percentage of 5% or less.

In some embodiments, the negative electrode film layer may further optionally include other auxiliaries. As an example, the other auxiliaries may include a thickener, such as carboxymethyl cellulose sodium (CMC-Na) or a PTC thermistor material. In some embodiments, based on the total mass of the negative electrode film layer, the other auxiliaries are present in a total mass percentage of 2% or less.

In some embodiments, the negative electrode current collector may be a metal foil or a composite current collector. As an example of the metal foil, a copper foil or a copper alloy foil may be used. The composite current collector may include a polymer material base layer and a metal material layer formed on at least one surface of the polymer material base layer. As an example, the metal material may include one or more of copper, copper alloy, nickel, nickel alloy, titanium, titanium alloy, silver and silver alloy, and the polymer material base layer may include one or more of polypropylene (PP), polyethylene terephthalate (PET), polybutylene terephthalate (PBT), polystyrene (PS) and polyethylene (PE).

The negative electrode film layer is usually formed by coating the negative electrode current collector with a negative electrode slurry, drying, and cold-pressing. The negative electrode slurry is usually formed by dispersing the negative electrode active material, the optional conductive agent, the optional binder, and the other optional auxiliaries in a solvent and stirring uniformly. The solvent may be N-methylpyrrolidone (NMP) or deionized water, but is not limited thereto.

The negative electrode plate does not exclude other additional functional layers than the negative electrode film layer. For example, in some embodiments, the negative electrode plate further includes a protective layer covering the surface of the negative electrode film layer.

[Separator]

In some embodiments, the secondary battery further includes a separator. There is no particular limitation on the type of the separator in the present application. The separator may be any known porous separator with good chemical and mechanical stability.

In some embodiments, the separator may be made of a material selected from at least one of glass fibers, a non-woven fabric, polyethylene, polypropylene, and polyvinylidene fluoride. The separator may be a single-layer thin film or a multi-layer composite thin film without special limitations. When the separator is a multi-layer composite thin film, materials of various layers may be the same or different without special restrictions.

In some embodiments, the positive electrode plate, the negative electrode plate, and the separator may be manufactured into an electrode assembly through a winding process or a stacking process.

In some embodiments, the secondary battery may include an outer package. The outer package may be used for packaging the foregoing electrode assembly and electrolyte.

In some embodiments, the outer package of the secondary battery may be a hard housing, such as a hard plastic housing, an aluminum housing, or a steel housing. The outer package of the secondary battery may alternatively be a soft bag, such as a pocket type soft bag. The soft bag may be made of plastic, which may be polypropylene, polybutylene terephthalate, poly(butylene succinate), and the like.

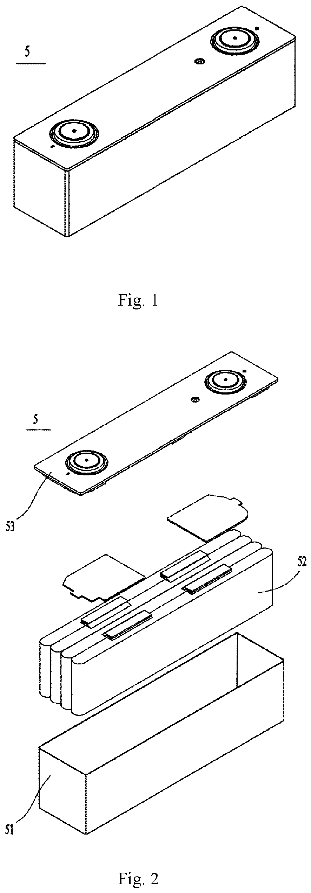

The present application does not have particular limitation to the shape of the secondary battery. The secondary battery may be cylindrical, square, or in other arbitrary shape. Fig. 1 shows a secondary battery 5 with a square structure as an example.

In some embodiments, as shown in Fig. 1 and Fig. 2, the outer package may include a housing 51 and a cover plate 53. The housing 51 may include a bottom plate and side plates connected to the bottom plate, and the bottom plate and the side plates enclose an accommodating cavity. The housing 51 has an opening in communication with the accommodating cavity, and the cover plate 53 is used to close the opening to seal the accommodating cavity. The positive electrode plate, the negative electrode plate, and the separator may be wound or laminated to form an electrode assembly 52. The electrode assembly 52 is packaged in the accommodating cavity. The electrolytic solution infiltrates the electrode assembly 52. The secondary battery 5 includes one or more electrode assemblies 52, which may be adjusted according to requirements.

A manufacturing method for the secondary battery in the present application is well-known. In some embodiments, the positive electrode plate, the separator, the negative electrode plate, and the electrolytic solution may be assembled to form the secondary battery. As an example, the positive electrode plate, the separator, and the negative electrode plate may form an electrode assembly through a winding or laminating process, the electrode assembly is placed in an outer package and dried, then the electrolytic solution is injected, followed by vacuum packaging, standing, formation, shaping, and other processes, thereby obtaining the secondary battery.

In some embodiments of the present application, the secondary battery according to the present application may be assembled into a battery module. The battery module may include a plurality of secondary batteries, and the specific quantity may be adjusted according to the application and capacity of the battery module.

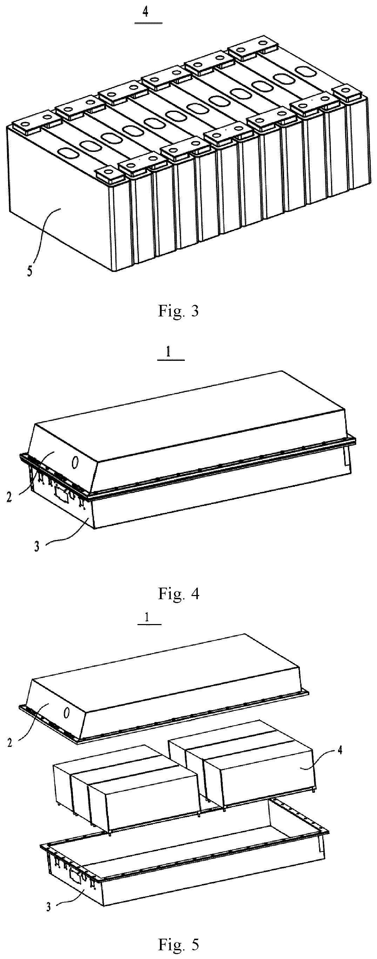

Fig. 3 is a schematic diagram of a battery module 4 as an example. As shown in Fig. 3, in the battery module 4, a plurality of secondary batteries 5 may be arranged in sequence along a length of the battery module 4. Of course, the secondary batteries may be arranged in any other manner. Further, the plurality of secondary batteries 5 may be fixed by fasteners.

Optionally, the battery module 4 may further include a housing having an accommodating space, and the plurality of secondary batteries 5 are accommodated in the accommodating space.

In some embodiments, the foregoing battery module may alternatively be assembled into a battery pack, and the quantity of the battery module included in the battery pack may be adjusted according to the application and capacity of the battery pack.

Fig. 4 and Fig. 5 are schematic diagrams of a battery pack 1 as an example. As shown in Fig. 4 and Fig. 5, the battery pack 1 may include a battery box and a plurality of battery modules 4 disposed in the battery box. The battery box includes an upper box body 2 and a lower box body 3. The upper box body 2 is used to cover and close the lower box body 3 to form a closed space for accommodating the battery modules 4. A plurality of battery modules 4 may be arranged in the battery box in any manner.

**Electrical device**

In a second aspect, the present application provides an electrical device, which includes at least one of the secondary battery, the battery module, and the battery pack of the present application. The secondary battery, the battery module, and the battery pack may be used as a power source of the electrical device or as an energy storage unit of the electrical device. The electrical device may be, but is not limited to, a mobile device (such as a mobile phone or a notebook computer), an electric vehicle (such as a pure electric vehicle, a hybrid electric vehicle, a plug-in hybrid electric vehicle, an electric bicycle, an electric scooter, an electric golf cart, or an electric truck), an electric train, a ship, a satellite, an energy storage system, or the like.

The electrical device may include the secondary battery, the battery module, or the battery pack according to its usage requirements.

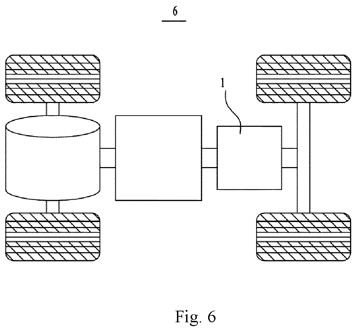

Fig. 6 is a schematic diagram of an electrical device as an example. The electrical device 6 is a pure electric vehicle, a hybrid electric vehicle, a plug-in hybrid electric vehicle, or the like. In order to meet requirements of the electrical device for high power and high energy density, the battery pack 1 or the battery module may be used.

As another example, the electrical device may be a mobile phone, a tablet computer, a notebook computer, or the like. The electrical device is generally required to be thin and light, so the secondary battery may be used as a power source.

**Examples**

The following examples more specifically describe the content disclosed in the present application, and these examples are only used for explanatory description, because various modifications and changes made within the scope of the content disclosed in the present application are apparent to those skilled in the art. Unless otherwise stated, all parts, percentages, and ratios described in the following examples are based on weight, all reagents used in the examples are commercially available or synthesized according to conventional methods and can be directly used without further treatment, and all instruments used in the examples are commercially available.

**Example 1**

1. Manufacturing of a positive electrode plate

An aluminum foil with a thickness of 12 $\mu$m was used as a positive electrode current collector.

A positive electrode active material $LiNi_{0.65}Co_{0.07}Mn_{0.28}$, a conductive agent carbon black, and polyvinylidene fluoride (PVDF) as a binder were fully mixed at a weight ratio of 97.5:1.4:1.1 in an appropriate amount of solvent NMP to form a uniform positive electrode slurry; and the positive electrode slurry was uniformly applied to a surface of the positive electrode current collector aluminum foil followed by drying and cold pressing to obtain a positive electrodeplate.

2. Manufacturing of a negative electrode plate

A copper foil with a thickness of 8 $\mu$m was used as a negative electrode current collector.

A negative electrode active material graphite, styrene butadiene rubber (SBR) as a binder, carboxymethyl cellulose sodium (CMC-Na) as a thickener, and a conductive agent carbon black (Super P) were fully mixed at a weight ratio of 96.2: 1.8: 1.2:0.8 in an appropriate amount of solvent deionized water to form a uniform negative electrode slurry; and the negative electrode slurry was uniformly applied to a surface of the negative electrode current collector copper foil followed by drying and cold pressing to obtain a negative electrode plate.

3. Separator

A porous polyethylene (PE) film was used as the separator.

4. Preparation of an electrolytic solution

In an environment with a water content less than 10 ppm, non-aqueous organic solvents including ethylene carbonate, methyl ethyl carbonate, and diethyl carbonate were mixed at a volume ratio of 1:1:1 to obtain an electrolyte solvent. Subsequently, additives were dissolved in the mixed solvent to prepare the electrolytic solution with a lithium salt concentration of 1 mol/L. The particular substances contained in the electrolytic solution were listed in the following table.

5. Manufacturing of a secondary battery

The positive electrode plate, the separator, and the negative electrode plate were laminated in sequence to ensure that the separator was located between the positive electrode plate and the negative electrode plate for separation, and then wound to obtain an electrode assembly; and the electrode assembly was placed in an outer package housing and dried, then the electrolytic solution was injected, followed by vacuum packaging, standing, formation, shaping, and other processes, thereby obtaining a lithium-ion battery.

**Example 2**

Examples 2-1 to 2-3

The secondary batteries in Examples 2-1 to 2-3 were manufactured by a similar method to Example 1 with the difference that the mass percentage A1 of "boron-containing lithium salt additives" was adjusted. Please refer to table 1 for the particular parameter.

Examples 2-4 to 2-5

The secondary batteries in Examples 2-4 to 2-5 were manufactured by a similar method to Example 1 with the difference that the type of "boron-containing lithium salt additives" was adjusted. Please refer to table 1 for the particular parameter.

Examples 2-6 to 2-8

The secondary batteries in Examples 2-6 to 2-8 were manufactured by a similar method to Example 1 with the difference that the mass percentage A2 of "phosphorus-containing lithium salt additives" was adjusted. Please refer to table 1 for the particular parameter.

Example 2-9

The secondary battery in Example 2-9 was manufactured by a similar method to Example 1 with the difference that the type of "phosphorus-containing lithium salt additives" was adjusted. Please refer to table 1 for the particular parameter.

Examples 2-10 to 2-12

The secondary batteries in Examples 2-10 to 2-12 were manufactured by a similar method to Example 1 with the difference that the mass percentage A3 of "sulfur-containing lithium salt additives" was adjusted. Please refer to table 1 for the particular parameter.

Example 2-13

The secondary battery in Example 2-13 was manufactured by a similar method to Example 1 with the difference that the type of "sulfur-containing lithium salt additives" was adjusted. Please refer to table 1 for the particular parameter.

**Comparative Examples**

The secondary battery in Comparative Example 1 was manufactured by a similar method to Example 1 with the difference that no boron-containing lithium salt was added. Please refer to table 1 for the particular parameter.
The secondary battery in Comparative Example 2 was manufactured by a similar method to Example 1 with the difference that no phosphorus-containing lithium salt was added. Please refer to table 1 for the particular parameter.
The secondary battery in Comparative Example 3 was manufactured by a similar method to Example 1 with the difference that no sulfur-containing lithium salt was added. Please refer to table 1 for the particular parameter.
The secondary battery in Comparative Example 4 was manufactured by a similar method to Example 1 with the difference that the mass percentage A1 of "boron-containing lithium salt" was adjusted in which A1+A2+A3>3. Please refer to table 1 for the particular parameter.

Table 1

| No. | Boron-containing lithium salt additives | | Phosphorus-containing lithium salt additives | | Sulfur-containing lithium salt additives | | A1+A2+A3 |
|---|---|---|---|---|---|---|---|
| | Type | A1% | Type | A2% | Type | A3% | |
| Example 1 | LiDFOB | 0.1 | $LiPO_2F_2$ | 0.1 | $LiFSO_3$ | 0.1 | 0.3 |
| Example 2-1 | LiDFOB | 0.4 | $LiPO_2F_2$ | 0.3 | $LiFSO_3$ | 0.3 | 1 |
| Example 2-2 | LiDFOB | 0.6 | $LiPO_2F_2$ | 0.3 | $LiFSO_3$ | 0.3 | 1.2 |
| Example 2-3 | LiDFOB | 2.4 | $LiPO_2F_2$ | 0.3 | $LiFSO_3$ | 0.3 | 3 |
| Example 2-4 | $LiBF_4$ | 0.6 | $LiPO_2F_2$ | 0.3 | $LiFSO_3$ | 0.3 | 1.2 |
| Example 2-5 | LiBOB | 0.6 | $LiPO_2F_2$ | 0.3 | $LiFSO_3$ | 0.3 | 1.2 |
| Example 2-6 | LiDFOB | 0.6 | $LiPO_2F_2$ | 0.1 | $LiFSO_3$ | 0.3 | 1 |
| Example 2-7 | LiDFOB | 0.6 | $LiPO_2F_2$ | 0.4 | $LiFSO_3$ | 0.3 | 1.3 |
| Example 2-8 | LiDFOB | 0.6 | $LiPO_2F_2$ | 2.1 | $LiFSO_3$ | 0.3 | 3 |
| Example 2-9 | LiDFOB | 0.6 | $Li_3PO_4$ | 0.3 | $LiFSO_3$ | 0.3 | 1.2 |
| Example 2-10 | LiDFOB | 0.6 | $LiPO_2F_2$ | 0.3 | $LiFSO_3$ | 0.1 | 1 |
| Example 2-11 | LiDFOB | 0.6 | $LiPO_2F_2$ | 0.3 | $LiFSO_3$ | 0.4 | 1.3 |
| Example 2-12 | LiDFOB | 0.6 | $LiPO_2F_2$ | 0.3 | $LiFSO_3$ | 2.1 | 3 |
| Example 2-13 | LiDFOB | 0.6 | $LiPO_2F_2$ | 0.3 | Li2SO4 | 0.3 | 1.2 |
| Comparative Example 1 | / | / | $LiPO_2F_2$ | 0.3 | $LiFSO_3$ | 0.3 | 0.8 |
| Comparative Example 2 | LiDFOB | 0.6 | / | / | $LiFSO_3$ | 0.3 | 0.8 |

(continued)

| No. | Boron-containing lithium salt additives | | Phosphorus-containing lithium salt additives | | Sulfur-containing lithium salt additives | | A1+A2+A3 |
|---|---|---|---|---|---|---|---|
| | Type | A1% | Type | A2% | Type | A3% | |
| Comparative Example 3 | LiDFOB | 0.6 | $LiPO_2F_2$ | 0.3 | / | / | 0.8 |
| Comparative Example 4 | LiDFOB | 2.6 | $LiPO_2F_2$ | 0.8 | $LiFSO_3$ | 0.6 | 4 |

**Example 3**

Examples 3-1 to 3-5

The secondary batteries in Examples 3-1 to 3-5 were manufactured by a similar method to Example 1 with the difference that the mass percentage B of "negative electrode film-forming additive" was adjusted. Please refer to tables 2 to 4 for the particular parameter.

Examples 3-6 to 3-8

The secondary batteries in Examples 3-6 to 3-8 were manufactured by a similar method to Example 1 with the difference that the type of "negative electrode film-forming additive" was adjusted. Please refer to tables 2 to 4 for the particular parameter.

Examples 3-9 to 3-15

The secondary batteries in Examples 3-9 to 3-15 were manufactured by a similar method to Example 1 with the difference that the type of "negative electrode film-forming additive" was adjusted and a gaseous film-forming additive was added.

When the additives in the electrolytic solution further comprises a gaseous film-forming additive, a non-gaseous film-forming additive was added first, and after the non-gaseous film-forming additive was added, then vacuum is pumped in the liquid injection machine with a vacuum of -0.07 MPa to -0.1 MPa (the vacuum is defined as the difference between an actual pressure and the atmospheric pressure) for 0.5-3 minutes, and then the gaseous film-forming additive was injected. Please refer to tables 2 to 4 for the particular parameter.

Examples 3-16 to 3-22

The secondary batteries in Examples 3-16 to 3-22 were manufactured by a similar method to Example 1 with the difference that a mass ratio C2/C1 of carbon monoxide to carbon dioxide in a gaseous film-forming additive was adjusted. Please refer to tables 2 to 4 for the particular parameter.

Table 2

| No. | Boron-containing lithium salt additives | | Phosphorus-containing lithium salt additives | | Sulfur-containing lithium salt additives | | A=A1+A2+A3 |
|---|---|---|---|---|---|---|---|
| | Type | A1 | Type | A2 | Type | A3 | |
| Example 1 | LiDFOB | 0.1 | $LiPO_2F_2$ | 0.1 | $LiFSO_3$ | 0.1 | 0.3 |
| Example 3-1 | LiDFOB | 0.1 | $LiPO_2F_2$ | 0.1 | $LiFSO_3$ | 0.1 | 0.3 |
| Example 3-2 | LiDFOB | 0.1 | $LiPO_2F_2$ | 0.1 | $LiFSO_3$ | 0.1 | 0.3 |
| Example 3-3 | LiDFOB | 0.1 | $LiPO_2F_2$ | 0.04 | $LiFSO_3$ | 0.04 | 0.18 |
| Example 3-4 | LiDFOB | 0.1 | $LiPO_2F_2$ | 0.01 | $LiFSO_3$ | 0.01 | 0.12 |
| Example 3-5 | LiDFOB | 0.1 | $LiPO_2F_2$ | 0.01 | $LiFSO_3$ | 0.01 | 0.12 |
| Example 3-6 | LiDFOB | 0.1 | $LiPO_2F_2$ | 0.1 | $LiFSO_3$ | 0.1 | 0.3 |
| Example 3-7 | LiDFOB | 0.1 | $LiPO_2F_2$ | 0.1 | $LiFSO_3$ | 0.1 | 0.3 |

(continued)

| No. | Boron-containing lithium salt additives | | Phosphorus-containing lithium salt additives | | Sulfur-containing lithium salt additives | | A=A1+A2+A3 |
|---|---|---|---|---|---|---|---|
| | Type | A1 | Type | A2 | Type | A3 | |
| Example 3-8 | LiDFOB | 0.1 | $LiPO_2F_2$ | 0.1 | $LiFSO_3$ | 0.1 | 0.3 |
| Example 3-9 | LiDFOB | 0.1 | $LiPO_2F_2$ | 0.1 | $LiFSO_3$ | 0.1 | 0.3 |
| Example 3-10 | LiDFOB | 0.1 | $LiPO_2F_2$ | 0.1 | $LiFSO_3$ | 0.1 | 0.3 |
| Example 3-11 | LiDFOB | 0.1 | $LiPO_2F_2$ | 0.1 | $LiFSO_3$ | 0.1 | 0.3 |
| Example 3-12 | LiDFOB | 0.1 | $LiPO_2F_2$ | 0.1 | $LiFSO_3$ | 0.1 | 0.3 |
| Example 3-13 | LiDFOB | 0.1 | $LiPO_2F_2$ | 0.1 | $LiFSO_3$ | 0.1 | 0.3 |
| Example 3-14 | LiDFOB | 0.1 | $LiPO_2F_2$ | 0.1 | $LiFSO_3$ | 0.1 | 0.3 |
| Example 3-15 | LiDFOB | 0.1 | $LiPO_2F_2$ | 0.1 | $LiFSO_3$ | 0.1 | 0.3 |
| Example 3-16 | LiDFOB | 0.1 | $LiPO_2F_2$ | 0.1 | $LiFSO_3$ | 0.1 | 0.3 |
| Example 3-17 | LiDFOB | 0.1 | $LiPO_2F_2$ | 0.1 | $LiFSO_3$ | 0.1 | 0.3 |
| Example 3-18 | LiDFOB | 0.1 | $LiPO_2F_2$ | 0.1 | $LiFSO_3$ | 0.1 | 0.3 |
| Example 3-19 | LiDFOB | 0.1 | $LiPO_2F_2$ | 0.1 | $LiFSO_3$ | 0.1 | 0.3 |
| Example 3-20 | LiDFOB | 0.1 | $LiPO_2F_2$ | 0.1 | $LiFSO_3$ | 0.1 | 0.3 |
| Example 3-21 | LiDFOB | 0.1 | $LiPO_2F_2$ | 0.1 | $LiFSO_3$ | 0.1 | 0.3 |
| Example 3-22 | LiDFOB | 0.1 | $LiPO_2F_2$ | 0.1 | $LiFSO_3$ | 0.1 | 0.3 |

Table 3

| No. | Negative-electrode film-forming additives | | | | | | | | |
|---|---|---|---|---|---|---|---|---|---|
| | Non-gaseous film-forming additives | | | | | | Gaseous film-forming additives | | |
| | Carbonate Additives | | Sulfate Additives | | Sulfite Additives | | Type | C2 of $CO_2$ | C1 of CO |
| | Type | D1 | Type | D2 | Type | D3 | | | |
| Example 1 | FEC | 0.8 | DTD | 0.8 | ES | 0.8 | / | 0 | 0 |
| Example 3-1 | FEC | 0.5 | DTD | 0.5 | ES | 0.5 | / | 0 | 0 |
| Example 3-2 | FEC | 2.5 | DTD | 1 | ES | 1 | / | 0 | 0 |
| Example 3-3 | FEC | 2 | DTD | 1.5 | ES | 1.5 | / | 0 | 0 |
| Example 3-4 | FEC | 2 | DTD | 2 | ES | 2 | / | 0 | 0 |
| Example 3-5 | FEC | 2.4 | DTD | 2.4 | ES | 2.2 | / | 0 | 0 |
| Example 3-6 | VC | 0.8 | DTD | 0.8 | ES | 0.8 | / | 0 | 0 |
| Example 3-7 | FEC | 0.8 | PS | 0.8 | ES | 0.8 | / | 0 | 0 |
| Example 3-8 | FEC | 0.8 | DTD | 0.8 | VES | 0.8 | / | 0 | 0 |
| Example 3-9 | FEC | 1 | DTD | 1 | ES | 1 | $CO_2$ | 0.0017 | 0 |
| Example 3-10 | FEC | 1 | DTD | 1 | ES | 1 | CO | 0 | 0.033 |
| Example 3-11 | FEC | 1 | DTD | 1 | ES | 1 | $CO_2$+CO | 0.12 | 0.047 |
| Example 3-12 | FEC | 1 | DTD | 1 | ES | 1 | $SO_2$ | 0.5 | 0 |
| Example 3-13 | FEC | 1 | DTD | 1 | ES | 1 | $SO_3$ | 2.67 | 0 |
| Example 3-14 | FEC | 1 | DTD | 1 | ES | 1 | $PO_3$ | 4 | 0 |
| Example 3-15 | FEC | 1 | DTD | 1 | ES | 1 | $P_2O_5$ | 6.67 | 0 |

(continued)

| No. | Negative-electrode film-forming additives | | | | | | | | |
|---|---|---|---|---|---|---|---|---|---|
| | Non-gaseous film-forming additives | | | | | | Gaseous film-forming additives | | |
| | Carbonate Additives | | Sulfate Additives | | Sulfite Additives | | Type | $C2$ of $CO_2$ | $C1$ of $CO$ |
| | Type | D1 | Type | D2 | Type | D3 | | | |
| Example 3-16 | FEC | 1 | DTD | 1 | ES | 1 | $CO_2$+CO | 0.001 | 0.1 |
| Example 3-17 | FEC | 1 | DTD | 1 | ES | 1 | $CO_2$+CO | 0.16 | 0.08 |
| Example 3-18 | FEC | 1 | DTD | 1 | ES | 1 | $CO_2$+CO | 0.48 | 0.06 |
| Example 3-19 | FEC | 1 | DTD | 1 | ES | 1 | $CO_2$+CO | 0.12 | 0.01 |
| Example 3-20 | FEC | 1 | DTD | 1 | ES | 1 | $CO_2$+CO | 0.25 | 0.01 |
| Example 3-21 | FEC | 1 | DTD | 1 | ES | 1 | $CO_2$+CO | 0.2 | 0.005 |
| Example 3-22 | FEC | 1 | DTD | 1 | ES | 1 | $CO_2$+CO | 0.3 | 0.005 |

Table 4

| No. | A | B | B/A | C | D | C*D | C2/C1 |
|---|---|---|---|---|---|---|---|
| Example 1 | 0.3 | 2.4 | 8 | 0 | 2.4 | 0 | / |
| Example 3-1 | 0.3 | 1.5 | 2 | 0 | 1.5 | 0 | / |
| Example 3-2 | 0.3 | 4.5 | 15 | 0 | 4.5 | 0 | / |
| Example 3-3 | 0.18 | 5 | 30 | 0 | 5 | 0 | / |
| Example 3-4 | 0.12 | 6 | 50 | 0 | 6 | 0 | / |
| Example 3-5 | 0.12 | 7 | 60 | 0 | 7 | 0 | / |
| Example 3-6 | 0.3 | 2.4 | 8 | 0 | 2.4 | 0 | / |
| Example 3-7 | 0.3 | 2.4 | 8 | 0 | 2.4 | 0 | / |
| Example 3-8 | 0.3 | 2.4 | 8 | 0 | 2.4 | 0 | / |
| Example 3-9 | 0.3 | 3.0 | 10 | 0.0017 | 3 | 0.005 | / |
| Example 3-10 | 0.3 | 3.0 | 10.1 | 0.03 | 3 | 0.1 | / |
| Example 3-11 | 0.3 | 3.2 | 10.5 | 0.17 | 3 | 0.5 | / |
| Example 3-12 | 0.3 | 3.5 | 11.7 | 0.5 | 3 | 1.5 | / |
| Example 3-13 | 0.3 | 5.7 | 18. 9 | 2. 7 | 3 | 8 | / |
| Example 3-14 | 0.3 | 7.0 | 23.3 | 4 | 3 | 12 | / |
| Example 3-15 | 0.3 | 9.7 | 32.2 | 6. 7 | 3 | 20 | / |
| Example 3-16 | 0.3 | 3.1 | 10.337 | 0.101 | 3 | 0.303 | 0.01 |
| Example 3-17 | 0.3 | 3.2 | 10.8 | 0.24 | 3 | 0.72 | 2 |
| Example 3-18 | 0.3 | 3.5 | 11.8 | 0.54 | 3 | 1.62 | 8 |
| Example 3-19 | 0.3 | 3.1 | 10.43 | 0.13 | 3 | 0.39 | 12 |
| Example 3-20 | 0.3 | 3.3 | 10.87 | 0.26 | 3 | 0.78 | 25 |
| Example 3-21 | 0.3 | 3.2 | 10.68 | 0.205 | 3 | 0.615 | 40 |
| Example 3-22 | 0.3 | 3.3 | 11.017 | 0.305 | 3 | 0.915 | 60 |

In Table 4, A=A1+A2+A3, i.e., A represents a total mass percentage of the boron-containing lithium salt additives, the phosphorus-containing lithium salt additives, and the sulfur-containing lithium salt additives.

C=C1+C2, i.e., C represents a total mass percentage of the gaseous film forming additives.

D=D1+D2+D3, i.e., D represents a total mass percentage of non-gaseous film forming additives.

B=C+D, i.e., B represents the total mass percentage of the negative electrode film-forming additive.

Test section

1. Test method for content of components in an electrolytic solution

Freshly prepared electrolytic solution was received, or the electrolytic solution can be obtained from a secondary battery, and then determination of components of the electrolytic solution was performed using one or more of Gas Chromatography-Mass Spectrometry (GC-MS), Ion Chromatography (IC), Liquid Chromatography (LC), Nuclear Magnetic Resonance Spectrometry (NMR), and the like.

Gas chromatography-mass spectrometry (GC-MS): In accordance with GB/T-9722-2006/GB/T6041-2002, gas chromatography and mass spectrometry were used in combination. Gas chromatography was used to separate components in the sample, the separated components were broken into ionic fragments in mass spectrometry, which form specific mass spectra according to mass-to-charge ratios (m/z) thereby obtaining a qualitative analysis result of the organic ingredients in the electrolytic solution. Then the organic components in the electrolytic solution were separated in the chromatographic column and detection signal spectra of the components were generated, in which a retention time was used to achieve qualification of the components, and a peak area was calibrated based on standard to achieve quantification, so as to obtain a quantitative testing and analysis of organic components in the electrolytic solution.

Ion chromatography (IC): In accordance with JY/T-020, anions of lithium salts and lithium salt additives in the electrolytic solution were detected by ion chromatography to quantify them.

Nuclear magnetic resonance spectrometry (NMR): in accordance with JY/T 0578-2020, qualitative and quantitative analysis of components in the electrolytic solution were obtained.

**2. Performance test of the secondary battery**

2.1 Cycle performance test of the secondary battery at 45°C

At 45 °C, the secondary battery was charged with a constant current of 1 C to 4.3 V and continuously charged by the constant voltage until the current was 0.05 C, then the secondary battery was in a fully charged state, at which the charge capacity was recorded as a charge capacity at the $1^{st}$ cycle. The secondary battery was allowed to stand for 5 min and then discharged by a constant current of 1 C to 2.8V, at which the discharge capacity was recorded as a discharge capacity at the $1^{st}$ cycle. This was a charging and discharging cycle. The secondary battery was subjected to the charging and discharging cycles according to the above method, and the discharge capacity for each cycle was recorded. Capacity retention rate (%) of the secondary battery at 25 °C for 600 cycles = discharge capacity at the $600^{th}$ cycle / discharge capacity at the $1^{st}$ cycle $\times$ 100%.

2.2 Dynamic performance

The secondary battery having been subjected to the cycle test of 2.1 at 45°C was taken and then charged at 0.1C to 3.7V. The resulting secondary battery was disassembled in PRS340/11-119-11 Braun glove box, to take the positive and negative electrode plates. These electrode plates were cleaned with dimethyl carbonate DMC, and then punched and cut into square pieces with a size of 23*34mm$^2$. Then a symmetrical battery of positive electrode-positive electrode &negative electrode -negative electrode was formed by placing electrode plates in the order of an electrode plate - a separator - an electrode plate in a special aluminum-plastic film to form a package, taking 1M electrolytic solution of LiPF6 in EC/EMC/DEC=3/5/2 by a pipette gun, injecting 300 microliters of the electrolytic solution into the package, and then encapsulating the package by simple encapsulating machine. The resulting battery was tested at an electrochemical workstation of Shanghai Tatsunghwa for its AC impedance. The AC impedance was measured at 25°C, 500kHz-500mHz frequency, frequency point number 73, and then the real part of the impedance was taken as the horizontal coordinate and minus of the imaginary part of the impedance was taken as the vertical coordinate to make a graph, and the cathode-anode dynamics was characterized according to the horizontal coordinate Rct (charge transfer resistance) corresponding to the valley position in the graph.

**Test results**

The cycle performance, and dynamic performance of the secondary battery were improved as shown in Tables 5 to 6.

Table 5

| No. | Cycle performance at 45°C | Dynamic performance-positive electrode(Cathode) Rct | Dynamic performance-negative electrode(Anode) Rct |
|---|---|---|---|
| Example 1 | 85.0% | 200 | 50 |
| Example 2-1 | 89.2% | 170 | 45 |
| Example 2-2 | 91.3% | 120 | 40 |
| Example 2-3 | 88.9% | 175 | 44 |
| Example 2-4 | 90.5% | 130 | 42 |
| Example 2-5 | 90.2% | 135 | 44 |
| Example 2-6 | 87.2% | 180 | 47 |
| Example 2-7 | 91.5% | 115 | 38 |
| Example 2-8 | 88.2% | 178 | 45 |
| Example 2-9 | 88.5% | 175 | 44 |
| Example 2-10 | 87.5% | 179 | 44 |
| Example 2-11 | 90.8% | 125 | 42 |
| Example 2-12 | 88.0% | 180 | 47 |
| Example 2-13 | 90.0% | 135 | 44 |
| Comparative Example 1 | 82.0% | 254 | 55 |
| Comparative Example 2 | 83.0% | 244 | 55 |
| Comparative Example 3 | 81.0% | 267 | 59 |
| Comparative Example 4 | 80.0% | 278 | 60 |

As can be seen from Table 5, compared to Comparative Examples 1 to 3, the boron-containing lithium salt additive, the phosphorus-containing lithium salt additive, and the sulfur-containing lithium salt additive all are added to the non-aqueous electrolytic solution according to Example 1 to Examples 2-13. When $0 < A1+A2+A3 \le 3$, in particular when $0.01 \le A1+A2+A3 \le 2$, all three can form good protection on the surface of the active material of the positive and negative electrodes, which is conducive to ensuring stability of the positive and negative active materials, thus improving the cycle performance of secondary batteries, and moreover, they form a dense and uniform interface film on the surface of the active materials, with a relatively small impedance, which is conducive to improving the dynamic performance of the secondary battery. When $A1+A2+A3 > 3$ (Example 2-3, Example 2-8, or Example 2-12), the interfacial film formed on the surface of the active material may be relatively thick, resulting in a relatively high interface impedance, which cannot improve the dynamic performance of the secondary battery so well.

Table 6

| No. | Cycle performance at 45 °C | Dynamic performance (Cathode) Rct | Dynamic performance (Anode) Rct |
|---|---|---|---|
| Example 1 | 85.0% | 200 | 50 |
| Example 3-1 | 84.0% | 220 | 48 |
| Example 3-2 | 87.0% | 180 | 50 |
| Example 3-3 | 86.0% | 190 | 54 |
| Example 3-4 | 85.8% | 191 | 55 |
| Example 3-5 | 84.7% | 203 | 56 |
| Example 3-6 | 86.0% | 196 | 54 |
| Example 3-7 | 85.8% | 197 | 55 |

(continued)

| No. | Cycle performance at 45 °C | Dynamic performance (Cathode) Rct | Dynamic performance (Anode) Rct |
|---|---|---|---|
| Example 3-8 | 85.2% | 198 | 54 |
| Example 3-9 | 86.0% | 200 | 46 |
| Example 3-10 | 85.5% | 200 | 48 |
| Example 3-11 | 88.0% | 196 | 44 |
| Example 3-12 | 85.8% | 198 | 48 |
| Example 3-13 | 85.5% | 199 | 48 |
| Example 3-14 | 85.6% | 198 | 48 |
| Example 3-15 | 85.4% | 198 | 50 |
| Example 3-16 | 87.0% | 200 | 47 |
| Example 3-17 | 88.0% | 199 | 46 |
| Example 3-18 | 89.0% | 198 | 44 |
| Example 3-19 | 89.5% | 198 | 42 |
| Example 3-20 | 89.9% | 200 | 43 |
| Example 3-21 | 89.2% | 199 | 44 |
| Example 3-22 | 89.0% | 200 | 48 |

As can be seen from Table 6, Examples 3-1 through Examples 3-8 can improve the protective performance against the negative electrode active material by adjusting the amount of the negative electrode film-forming additive; however, as the amount of the negative electrode film-forming additive increases, the interface impedance on the surface of the negative electrode active material increases, which results in a slight decrease in the dynamic performance.

Examples 3-9 through Examples 3-22 can further improve the protective performance of the negative electrode active material by adding a gaseous film-forming additive to the electrolyte, and the gaseous film-forming additive and the non-gaseous film-forming additive act synergistically, and the SEI film formed on the surface of the negative electrode active material has a low interface impedance, which can further improve the dynamic performance of the secondary battery.

Although the present application is described with reference to the preferred embodiments, various improvements can be made and equivalents can be substituted for components therein without departing from the scope of the present application. In particular, as long as there is no structural conflict, various technical features mentioned in the embodiments may be combined in any manner. The present application is not limited to the specific embodiments disclosed herein, but includes all technical solutions falling within the scope of the claims.

**Claims**

1.  A non-aqueous electrolyte, comprising at least two of a boron-containing lithium salt additive, a phosphorus-containing lithium salt additive, and a sulfur-containing lithium salt additive; wherein

    based on a total mass of the non-aqueous electrolyte, a mass percentage of the boron-containing lithium salt additive is A1%;
    based on the total mass of the non-aqueous electrolyte, a mass percentage of the phosphorus-containing lithium salt additive is A2%;
    based on the total mass of the non-aqueous electrolyte, a mass percentage of the sulfur-containing lithium salt additive is A3%; and
    the non-aqueous electrolyte satisfies: $0 < A1 + A2 + A3 \leq 3$; optionally, $0.01 \leq A1 + A2 + A3 \leq 2$.

2.  The non-aqueous electrolyte according to claim 1, wherein the non-aqueous electrolyte satisfies at least one of conditions (1) to (3):

EP 4 517 903 A1

$$(1)\ 0 < A1 \leqslant 2.4;$$

$$(2)\ 0 < A2 \leqslant 2.1;$$

$$(3)\ 0 < A3 \leqslant 2.1.$$

3. The non-aqueous electrolyte according to claim 1 or 2, wherein

the boron-containing lithium salt additive comprises one or more of lithium bifluoro-oxalate borate LiDFOB, lithium tetrafluoroborate $LiBF_4$, and lithium bisoxalate borate LiBOB; and/or
the phosphorus-containing lithium salt additive comprises one or more of lithium difluorophosphate $LiPO_2F_2$, lithium fluorophosphate $Li_2PO_3F$, and lithium phosphorate $Li_3PO_4$; and/or
the sulfur-containing lithium salt additive comprises one or more of lithium fluorosulfonate $LiFSO_3$, lithium sulfate $Li_2SO_4$, and lithium sulfamate $LiSO_3NH_2$.

4. The non-aqueous electrolyte according to any one of claims 1 to 3, further comprising a negative electrode film-forming additive, wherein
the negative electrode film-forming additive is configured to form an interfacial film on the surface of the negative electrode active material; the negative electrode film-forming additive has a mass percentage of B% based on the total mass of the non-aqueous electrolyte; and the non-aqueous electrolyte satisfies: $2 \leq B/(A1+A2+A3) \leq 60$; optionally, $3 \leq B/(A1+A2+A3) \leq 50$.

5. The non-aqueous electrolyte according to claim 4, wherein

the negative electrode film-forming additive comprises a gaseous film-forming additive and/or a non-gaseous film-forming additive;
optionally, the negative electrode film-forming additive comprises a gaseous film-forming additive and a non-gaseous film-forming additive;
based on the total mass of the non-aqueous electrolyte, a mass percentage of the gaseous film-forming additive is C%;
based on the total mass of the non-aqueous electrolyte, a mass percentage of the non-gaseous film-forming additive is D%, and
the non-aqueous electrolyte satisfies: $0.005 \leq C*D \leq 20$; optionally, $0.01 \leq C*D \leq 15$.

6. The non-aqueous electrolyte according to claim 5, wherein

the gaseous film-forming additive comprises one or more of carbon monoxide, carbon dioxide, sulfur dioxide, sulfur trioxide, nitrogen dioxide, nitrogen trioxide, phosphorus trioxide, and phosphorus pentoxide;
optionally, the gaseous film-forming additive comprises carbon monoxide and carbon dioxide;
based on the total mass of the nonaqueous electrolyte, a mass percentage of the carbon monoxide is C1%;
based on the total mass of the nonaqueous electrolyte, a mass percentage of the carbon dioxide is C2%, and
the non-aqueous electrolyte satisfies: $0.01 \leq C2/C1 \leq 60$; optionally, $0.1 \leq C2/C1 \leq 40$.

7. The non-aqueous electrolyte according to claim 6, wherein $10^{-6} \leq C1 \leq 0.1$; and/or $10^{-6} \leq C2 \leq 0.5$.

8. The non-aqueous electrolyte according to any one of claims 5 to 7, wherein

the non-gaseous film-forming additive comprises one or more of a carbonate additive, a sulfate additive, and a sulfite additive;
optionally, the carbonate additive comprises a cyclic carbonate additive and/or a linear carbonate additive;
further, the cyclic carbonate additive comprises a vinylidene carbonate VC, a fluorinated ethylene carbonate FEC, difluoroethylene carbonate DFEC, vinyl ethylene carbonate VEC, and dicaprylyl carbonate CC; the linear carbonate additive includes one or more of allyl ethyl carbonate AEC, diphenyl carbonate DPC, methyl allyl carbonate MAC, and polycarbonate VA;
optionally, the sulfate additive includes a cyclic sulfonate additive and/or a hydrocarbyl sulfate additive; further, the cyclic sulfonate additive includes one or more of 1,3-propane sultone PS, propene sultone PES, and 3-fluoro-1,3-propane sultone FPS; and/or the hydrocarbyl sulfate additive includes one or more of ethylene sulfate DTD, diethyl sulfate DES, and dimethyl sulfate DMS;
optionally the sulfite additive includes ethylene sulfite ES and/or vinyl ethylene sulfite VES.

9. The non-aqueous electrolyte according to any one of claims 5 to 8, wherein $0 < D \leq 7$.

10. A secondary battery, comprising

a positive electrode comprising a positive electrode active material;
a negative electrode comprising a negative electrode active material; and
the non-aqueous electrolyte according to any one of claims 1 to 9.

11. The secondary battery according to claim 10, wherein
the positive electrode active material has a molecular formula of $LiNi_xCo_yM_{1-x-y-z}O_2$, where M represents one or more of Mn, Fe, Mg, Al, Cu and Ti, $x \geq 0.5$, $0 \leq y \leq 0.2$, $x+y \leq 1$.

12. An electrical device, comprising the secondary battery according to claim 10 or 11.

Fig. 1

Fig. 2

4

Fig. 3

1

Fig. 4

1

Fig. 5

Fig. 6

## INTERNATIONAL SEARCH REPORT

| International application No. |
| --- |
| **PCT/CN2022/106063** |

| A. | CLASSIFICATION OF SUBJECT MATTER |
| --- | --- |
| | H01M10/0567(2010.01)i;H01M10/0525(2010.01)i |

According to International Patent Classification (IPC) or to both national classification and IPC

| B. | FIELDS SEARCHED |
| --- | --- |

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNABS; CNTXT; WPABS; DWPI; VEN; ENTXT; CNKI: 电池, 非水电解液, 负极, 阳极, 正极, 阴极, 界面膜, 钝化膜, 添加剂, 硼, 磷, 硫, 气态, battery, non-aqueous electrolyte, negative electrode, anode, positive electrode, cathode, interface facial mask, passivation film, additive, boron, phosphorus, sulfur, gaseous

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2019175578 A (MITSUI CHEMICALS INC.) 10 October 2019 (2019-10-10) description, paragraphs 24-138 | 1-4, 10-12 |
| Y | JP 2019175578 A (MITSUI CHEMICALS INC.) 10 October 2019 (2019-10-10) description, paragraphs 24-138 | 5-9 |
| Y | CN 1956251 A (BYD CO., LTD.) 02 May 2007 (2007-05-02) description, p. 1, paragraph 2 to p. 5, paragraph 2 | 5-9 |
| X | CN 109216653 A (SANYO ELECTRIC CO., LTD.) 15 January 2019 (2019-01-15) description, paragraphs 30-108 | 1-4, 10-12 |
| Y | CN 109216653 A (SANYO ELECTRIC CO., LTD.) 15 January 2019 (2019-01-15) description, paragraphs 30-108 | 5-9 |
| Y | CN 107579279 A (CHANGSHA XIAOXIN NEW ENERGY TECHNOLOGY CO., LTD.) 12 January 2018 (2018-01-12) description, paragraphs 4-23 | 5-9 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **11 April 2023** | **12 April 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

## INTERNATIONAL SEARCH REPORT

International application No.

**PCT/CN2022/106063**

**C.    DOCUMENTS CONSIDERED TO BE RELEVANT**

| Category* | Citation of document, with indication, where appropriate, of the relevant passages | Relevant to claim No. |
|---|---|---|
| A | CN 103620853 A (TOSHIBA CORP.) 05 March 2014 (2014-03-05)<br>entire document | 1-12 |
| A | JP 2022042755 A (CENTRAL GLASS CO., LTD.) 15 March 2022 (2022-03-15)<br>entire document | 1-12 |

INTERNATIONAL SEARCH REPORT
Information on patent family members

International application No.

**PCT/CN2022/106063**

| Patent document cited in search report | | | Publication date (day/month/year) | Patent family member(s) | | | Publication date (day/month/year) |
|---|---|---|---|---|---|---|---|
| JP | 2019175578 | A | 10 October 2019 | JP | 7103713 | B2 | 20 July 2022 |
| CN | 1956251 | A | 02 May 2007 | None | | | |
| CN | 109216653 | A | 15 January 2019 | US | 2019013543 | A1 | 10 January 2019 |
| | | | | JP | 2019016483 | A | 31 January 2019 |
| CN | 107579279 | A | 12 January 2018 | None | | | |
| CN | 103620853 | A | 05 March 2014 | US | 2014162117 | A1 | 12 June 2014 |
| | | | | US | 9331361 | B2 | 03 May 2016 |
| | | | | JP | 2013045759 | A | 04 March 2013 |
| | | | | JP | 5917049 | B2 | 11 May 2016 |
| | | | | WO | 2013031253 | A1 | 07 March 2013 |
| | | | | EP | 2750236 | A1 | 02 July 2014 |
| | | | | EP | 2750236 | B1 | 18 October 2017 |
| | | | | CN | 103620853 | B | 27 April 2016 |
| JP | 2022042755 | A | 15 March 2022 | None | | | |

Form PCT/ISA/210 (patent family annex) (July 2022)